(19) Europäisches Patentamt / European Patent Office / Office européen des brevets

(11) **EP 4 794 046 A1**

(12) **EUROPEAN PATENT APPLICATION**

(43) Date of publication:
**19.08.2026 Bulletin 2026/34**

(21) Application number: **25208043.7**

(22) Date of filing: **10.10.2025**

(51) International Patent Classification (IPC):
***H01M 10/0567*** (2010.01) ***H01M 50/403*** (2021.01)
***H01M 50/417*** (2021.01) ***H01M 50/426*** (2021.01)
***H01M 50/434*** (2021.01) ***H01M 50/443*** (2021.01)
***H01M 50/446*** (2021.01) ***H01M 50/449*** (2021.01)
***H01M 50/451*** (2021.01) ***H01M 50/457*** (2021.01)
***H01M 50/489*** (2021.01) ***H01M 50/491*** (2021.01)
*H01M 10/0525* (2010.01)

(52) Cooperative Patent Classification (CPC):
**H01M 50/457; H01M 10/0567; H01M 50/403; H01M 50/417; H01M 50/426; H01M 50/434; H01M 50/443; H01M 50/446; H01M 50/449; H01M 50/451; H01M 50/489; H01M 50/491;** H01M 10/0525; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.10.2024 CN 202411418538**

(71) Applicant: **Ningde Amperex Technology Ltd.**
**Ningde City, Fujian Province 352100 (CN)**

(72) Inventor: **CHEN, Minjing**
**Ningde City, Fujian Province 352100 (CN)**

(74) Representative: **Icosa**
**83 avenue Denfert-Rochereau**
**75014 Paris (FR)**

# (54) SEPARATOR, ELECTROCHEMICAL APPARATUS WITH SEPARATOR AND ELECTRICAL APPARATUS

(57) A separator includes a base film and an organic coating disposed on at least one surface of the base film. In a 10μm×5μm region of the organic coating, based on a mass of the organic coating, a mass percentage of a carbon element in the organic coating is W1, a mass percentage of a fluorine element in the organic coating is W2, and $0.45 \leq W1/W2 \leq 6$. The separator further includes an inorganic coating, the inorganic coating is disposed between the base film and the organic coating, the inorganic coating has a thickness of d3, the base film has a maximum pore size of r1, and $0.01 \leq r1/d3 \leq 0.21$.

EP 4 794 046 A1

## Description

## TECHNICAL FIELD

This application relates to the field of electrochemical technologies, and in particular, to a separator, an electrochemical apparatus with a separator and an electrical apparatus.

## BACKGROUND

Lithium-ion batteries have the characteristics such as high specific energy, high working voltage, low self-discharge rate, small size, and light weight. With increasing demand for diversified application scenarios of the lithium-ion batteries, the lithium-ion batteries are more widely used in portable electronic devices, drones, electric cleaning tools, electric vehicles, automobiles, household energy storage devices, etc.

With the rapid development of the lithium-ion batteries applied in fields such as automobiles, users' demand for shortening the charging time of the lithium-ion batteries has become more prominent, while the defect that the low-temperature performance is difficult to adapt to low-temperature environments has also become more apparent. Under high-current conditions, separators of the lithium-ion batteries may have swelling, leading to reduced lithium-ion migration rates and limiting the maximum charging rate of the lithium-ion batteries. Under low-temperature conditions, the performance of the lithium-ion batteries, such as effective discharge capacity, exhibits significant degradation, which limits the applications of the lithium-ion batteries. Therefore, there is an urgent need to improve the fast-charging performance and low-temperature performance of the lithium-ion batteries.

## SUMMARY

An objective of this application is to provide a separator, an electrochemical apparatus with the separator and an electrical apparatus, to improve the fast-charging performance and the low-temperature intermittent cycle performance of the electrochemical apparatus.

It is hereby noted that in the summary of this application, this application is explained by an example using a lithium-ion battery as an electrochemical apparatus, but the electrochemical apparatus of this application is not limited to the lithium-ion battery. The specific technical solutions are as follows:

A first aspect of this application provides a separator. The separator includes a base film and an organic coating disposed on at least one surface of the base film, where in a $10\mu m \times 5\mu m$ region of the organic coating, based on a mass of the organic coating, a mass percentage of a carbon element in the organic coating is W1, a mass percentage of a fluorine element in the organic coating is W2, $0.45 \leq W1 / W2 \leq 6$, preferably, $0.45 \leq W1 / W2 \leq 4.5$, and more preferably, $0.45 \leq W1 / W2 \leq 3$. The separator further includes an inorganic coating, the inorganic coating is disposed between the base film and the organic coating, the inorganic coating has a thickness of d3, the base film has a maximum pore size of r1, and preferably, $0.02 \leq r1 / d3 \leq 0.14$. When a mass ratio W1/W2 of the carbon element to the fluorine element in the organic coating and r1/d3 fall within the range of this application, polymers and fluorine-containing materials on the separator are uniformly distributed, so that surface active sites on a corresponding positive electrode material are maintained, reduction of the lithium-ion migration rate caused by swelling and pore blockage of excessive fluorine-containing materials and polymers in the electrolyte solution under high-current conditions is avoided, and the fast-charging performance of an electrochemical apparatus is improved. At low temperatures, the electrochemical reaction rate decreases, and some fluorine-containing materials may replace a carbonate solvent in the electrolyte solution, and enter the electrolyte solution, thereby reducing side reactions, mitigating interfacial gas production, and improving the low-temperature intermittent cycle performance of the electrochemical apparatus.

In one embodiment of this application, the organic coating includes a first polymer and a second polymer, and the first polymer includes at least one of homopolymers or copolymers of at least one monomer of propylene, vinylidene fluoride, acrylic acid, acrylate, styrene, acrylonitrile, Maleic anhydride, vinyl chloride, or allyl chloride. The second polymer includes at least one of homopolymers or copolymers of at least one monomer of vinylidene fluoride or hexafluoropropylene. Based on the mass of the organic coating, a mass percentage of the first polymer is W3, and $35\% \leq W3 \leq 75\%$. A mass percentage of the second polymer is W4, and $20\% \leq W4 \leq 60\%$. By selecting the above first polymer and second polymer and regulating values of W3 and W4 within the above range, it is conducive to satisfying the range of W1/W2, thereby improving the fast-charging performance and low-temperature intermittent cycle performance of the electrochemical apparatus.

In one embodiment of this application, the organic coating has a thickness of d1, the separator has a thickness of d2, $0.1 \leq d1/d2 \leq 0.25$, and $1\ \mu m \leq d1 \leq 4\ \mu m$. When a ratio (d1/d2) of the thickness of the coating of the separator to the thickness of the separator is within the above range, the ratio of overall thicknesses of the coating to the separator falls within an appropriate range, which is more conducive to improving the fast-charging performance and low-temperature

intermittent cycle performance of the electrochemical apparatus.

In one embodiment of this application, the base film has an average pore size of r2 and a minimum pore size of r3, $0.03\ \mu m \leq r1 - r2 \leq 0.14\ \mu m$, and/or $0.010\ \mu m \leq r2 - r3 \leq 0.035\ \mu m$. The separator satisfying the above conditions has a more appropriate pore structure, thereby improving the infiltration of the electrolyte solution to the separator. By controlling both r1-r2 and r2-r3 within the ranges of this application, the pore sizes on the separator become more uniform, and the overall stability of the electrochemical apparatus is improved, which is conducive to alleviating the problem that the temperature rise of the surface of the electrochemical apparatus is uneven due to relatively intense electrochemical reactions caused by excessively high flow rate of the electrolyte solution in a partial region, and thus conducive to further increasing the overcharge test pass rate and improving the fast-charging performance of the electrochemical apparatus.

In one embodiment of this application, $0.06\ \mu m \leq r1 \leq 0.22\ \mu m$. When the maximum pore size of the separator satisfies the above range, the pore sizes of the separator become more uniform. When the maximum pore size of the separator satisfies the above range, the pore sizes on the separator become more uniform. During overcharge testing, the separator is less prone to rupture, and the risk of a positive electrode contacting a negative active material and then causing a short circuit is reduced, thereby increasing the overcharge test pass rate. In addition, lithium ions have an appropriate transmission rate, and the electrolyte solution exhibits good infiltration to the separator.

In one embodiment of this application, the base film includes at least one of polyethylene, polypropylene, polyvinylidene fluoride, polyethylene terephthalate, polyimide, or aramid. For example, the polyethylene includes at least one of high density polyethylene, low density polyethylene or ultra-high molecular weight polyethylene. The obtained separator has a good effect for preventing short circuits and can improve the safety performance of the electrochemical apparatus through a shutdown effect.

In one embodiment of this application, the inorganic coating includes at least one of boehmite, aluminum oxide, silica, zirconium oxide, titanium dioxide, magnesium oxide, mullite, silicon carbide, silicon nitride, boron nitride, or aluminum nitride. The inorganic coating further includes a binder. The binder is at least one selected from polyvinylidene fluoride, vinylidene fluoride hexafluoropropylene copolymer, polyamide, polyacrylonitrile, polyacrylate, polyacrylic acid, polyacrylate salt, sodium carboxymethyl cellulose, polyvinylpyrrolidone, polyvinyl ether, polytetrafluoroethylene, or polyhexafluoropropylene. The inorganic coating on the surface of the separator can improve the heat resistance, oxidation resistance and electrolyte infiltrating property of the separator and enhance the adhesive force between the separator and positive and negative electrode plates.

A second aspect of this application provides an electrochemical apparatus. The electrochemical apparatus includes a positive electrode plate, a negative electrode plate, an electrolyte solution and the separator according to any one of the foregoing embodiments. The electrochemical apparatus provided in this application exhibits excellent fast-charging performance and low-temperature intermittent cycle performance.

In one embodiment of this application, the electrolyte solution includes an additive, and the additive includes a nitrile additive and a fluorine additive. The nitrile additive includes at least one of ethylene glycol bis(propionitrile) ether, adiponitrile or succinonitrile, and the fluorine additive includes at least one of fluoroethylene carbonate, difluoroethylene carbonate, trifluoropropylene carbonate, lithium bis(trifluoromethanesulphonyl)imide, or lithium bis(fluorosulfonyl)imide. Through the combined effect of the fluorine additive and the nitrile additive, a more stable electrolyte solution system can be provided, thereby reducing the oxidative decomposition heat generation of conventional carbonate solvents, reducing the temperature rise of the electrochemical apparatus, and improving the high-temperature storage volume expansion rate of the electrochemical apparatus by better capturing interface gases. Thus, through the mutual cooperation between the above electrolyte solution and the separator provided in this application, the fast-charging performance, low-temperature intermittent cycle performance, and high-temperature storage volume expansion rate of the electrochemical apparatus are all improved.

In one embodiment of this application, based on a total mass of the electrolyte solution, a mass percentage of the nitrile additive is W5, a mass percentage of the fluorine additive is W6, $1\% \leq W5 + W6 \leq 8\%$, and $0.3\% \leq W5 \leq 6\%$. Introducing the above additives into the electrolyte solution and regulating W5+W6 and W5 within the above ranges can better suppress temperature rise in the electrochemical apparatus without affecting the function of the electrolyte solution as a lithium-ion transport medium. Moreover, an interface film jointly formed by the nitrile additive and the fluorine additive at high temperatures has the function of capturing HF gas molecules at the interface at high temperatures, thereby improving the high-temperature storage volume expansion rate of the electrochemical apparatus. Thus, through the mutual cooperation between the above electrolyte solution and the separator provided in this application, the fast-charging performance, low-temperature intermittent cycle performance, and high-temperature storage volume expansion rate of the electrochemical apparatus are all improved.

In one embodiment of this application, the electrolyte solution includes acetonitrile, and based on the total mass of the electrolyte solution, a mass percentage of the acetonitrile is W7, and $45\% \leq W7 - W5 \leq 60\%$. By introducing the above additives into the electrolyte solution and regulating W7-W5 within the above range, the coexistence of the acetonitrile and the above nitrile additive can improve the transport rate of active ions such as lithium ions in the electrochemical apparatus, and promotes the preferential oxidative decomposition of other nitrile additives at the interface between the electrolyte

solution and the positive electrode to form a solid electrolytic interfacial film with stable structure and performance. Moreover, due to the rapid ion-conducting properties of the acetonitrile, the interfacial impedance under high current density is improved, thereby reducing the temperature rise of the electrochemical apparatus under high-current conditions, reducing gas production at the interface of the electrochemical apparatus under high temperatures, and further improving the high-temperature storage expansion rate of the electrochemical apparatus.

A third aspect of this application provides an electrical apparatus. The electrical apparatus includes the electrochemical apparatus according to any one of the foregoing embodiments.

This application has the beneficial effects:

This application provides the separator, including the base film and the organic coating disposed on at least one surface of the base film, based on the mass of the organic coating, the mass percentage of the carbon element in the organic coating is W1, the mass percentage of the fluorine element in the organic coating is W2, and $0.45 \leq W1 / W2 \leq 6$. The separator further includes the inorganic coating, the inorganic coating is disposed between the base film and the organic coating, the inorganic coating has the thickness of d3, the base film has the maximum pore size of r1, and $0.01 \leq r1 / d3 \leq 0.21$. When the mass ratio W1/W2 of the carbon element to the fluorine element in the organic coating and r1/d3 fall within the range of this application, the polymers and the fluorine-containing materials on the separator are uniformly distributed, so that the surface active sites on the corresponding positive electrode material are maintained, reduction of the lithium-ion migration rate caused by swelling and pore blockage of excessive fluorine-containing materials and polymers in the electrolyte solution under high-current conditions is avoided, and the fast-charging performance of the electrochemical apparatus is improved. At low temperatures, the electrochemical reaction rate decreases, and some fluorine-containing materials may replace a carbonate solvent in the electrolyte solution, thereby reducing side reactions, mitigating interfacial gas production, and improving the low-temperature intermittent cycle performance of the electrochemical apparatus.

Of course, implementing any product or method of this application is not necessary to achieve all the above-mentioned advantages simultaneously.

## DETAILED DESCRIPTION

The following describes the technical solutions in this application clearly in detail with reference to embodiments of this application. Evidently, the described embodiments are merely a part of but not all of the embodiments of this application. All other embodiments derived by a person skilled in the art based on this application still fall within the protection scope of this application.

This application provides a separator. The separator includes a base film and an organic coating disposed on at least one surface of the base film, where in a $10\mu m \times 5\mu m$ region of the organic coating, based on a mass of the organic coating, a mass percentage of a carbon element in the organic coating is W1, a mass percentage of a fluorine element in the organic coating is W2, $0.45 \leq W1 / W2 \leq 6$, preferably, $0.45 \leq W1 / W2 \leq 4.5$, and more preferably, $0.45 \leq W1 / W2 \leq 3$. For example, a mass ratio W1/W2 of the carbon element to the fluorine element in the organic coating may be 0.45, 0.5, 1, 1.5, 2, 2.5, 3, 3.5, 4, 4.5, 5, 5.5, 6, or a value falling within a range formed by any two thereof. The separator further includes an inorganic coating, the inorganic coating is disposed between the base film and the organic coating, the inorganic coating has a thickness of d3, the base film has a maximum pore size of r1, $0.01 \leq r1 / d3 \leq 0.21$, and preferably, $0.02 \leq r1 / d3 \leq 0.14$. For example, a ratio r1/d3 of the maximum pore size of the separator to the thickness of the inorganic coating may be 0.01, 0.02, 0.05, 0.07, 0.10, 0.1, 0.14, 0.17, 0.20, 0.21, or a value falling within a range formed by any two thereof. The "organic coating disposed on at least one surface of the base film" mentioned above means that the organic coating may be disposed on one surface of the base film along a thickness direction thereof, or on both surfaces of the base film along the thickness direction thereof. It is hereby noted that the "surface" here may be the entire region of the surface of the base film, or a partial region of the surface of the base film, without being particularly limited in this application, as long as the objectives of this application can be achieved. When a mass ratio W1/W2 of the carbon element to the fluorine element in the organic coating falls within the range of this application, polymers and fluorine-containing materials on the separator are uniformly distributed, so that surface active sites on a corresponding positive electrode material are maintained, reduction of the lithium-ion migration rate caused by swelling and pore blockage of excessive fluorine-containing materials and polymers in the electrolyte solution under high-current conditions is avoided, and the fast-charging performance of an electrochemical apparatus is improved. At low temperatures, the electrochemical reaction rate decreases, and some fluorine-containing materials may replace a carbonate solvent in the electrolyte solution, thereby reducing side reactions, mitigating interfacial gas production, and improving the low-temperature intermittent cycle performance of the electrochemical apparatus. When a ratio r1/d3 is within the above range, the separator exhibits good strength and appropriate porosity. When the electrochemical apparatus is subjected to external force or under high-temperature conditions, it is avoided that the high-temperature cycle performance is reduced due to the separator being prone to pore closure. Moreover, the separator exhibits excellent structural stability, which minimally affects the structural stability of a positive electrode and a negative electrode. Thus, electron transport on the surfaces of a positive electrode material layer and a

negative electrode material layer and lithium-ion shuttling between the positive electrode and the negative electrode are not prone to being affected, thereby being conducive to improving the overcharge test pass rate of the electrochemical apparatus. In this application, a low temperature refers to a temperature less than or equal to 25°C.

In one embodiment of this application, the organic coating includes a first polymer and a second polymer, and the first polymer includes at least one of homopolymers or copolymers of at least one monomer of propylene, vinylidene fluoride, acrylic acid, acrylate, styrene, acrylonitrile, Maleic anhydride, vinyl chloride, or allyl chloride. The second polymer includes at least one of homopolymers or copolymers of at least one monomer of vinylidene fluoride or hexafluoropropylene. The organic coating further includes a dispersant and a wetting agent. The dispersant is at least one selected from sodium carboxymethyl cellulose or potassium carboxymethyl cellulose. The wetting agent is at least one selected from dimethylsiloxane, polyoxyethylene alkylphenol ether, primary alcohol ethoxylate, polyoxyethylene-polyoxypropylene block copolymer or polyether-modified trimethylsiloxane. Based on the mass of the organic coating, a mass percentage of the first polymer is W3, and $35\% \leq W3 \leq 75\%$. A mass percentage of the second polymer is W4, and $20\% \leq W4 \leq 60\%$. For example, the mass percentage W3 of the first polymer may be 35%, 40%, 45%, 50%, 55%, 57%, 59%, 61%, 63%, 65%, 67%, 69%, 71%, 73%, 75%, or a value falling within a range formed by any two thereof. The mass percentage W4 of the second polymer may be 20%, 22%, 24%, 26%, 28%, 30%, 32%, 34%, 36%, 38%, 40%, 45%, 50%, 55%, 60%, or a value falling within a range formed by any two thereof. By selecting the above first polymer and second polymer and regulating values of W3 and W4 within the above range, it is conducive to satisfying the range of W1/W2, thereby improving the fast-charging performance and low-temperature intermittent cycle performance of the electrochemical apparatus.

In one embodiment of this application, the first polymer and the second polymer may be the same or different.

In one embodiment of this application, based on the mass of the organic coating, a mass percentage of the dispersant is 1% to 5%, and a mass percentage of the wetting agent is 1% to 5%.

In one embodiment of this application, the organic coating has a thickness of d1, the separator has a thickness of d2, $0.1 \leq d1 / d2 \leq 0.25$, and $1\ \mu m \leq d1 \leq 4\ \mu m$. For example, a ratio d1/d2 of the thickness of the coating on the separator to the thickness of the separator may be 0.1, 0.11, 0.12, 0.13, 0.14, 0.15, 0.16, 0.17, 0.18, 0.19, 0.2, 0.21, 0.22, 0.23, 0.24, 0.25, or a value falling within a range formed by any two thereof. The thickness d1 of the organic coating may be 1 μm, 2 μm, 3 μm, 4 μm, or a value falling within a range formed by any two thereof. When the thickness ratio increases, the migration of lithium ions becomes more tortuous and complex, which affects the lithium-ion migration rate. When the thickness ratio decreases, the thickness of the coating decreases while the thickness of a substrate increases, affecting the overall structural stability and mechanical strength of the separator. Additionally, the probability of pore closure in the separator increases, thereby affecting the fast-charging performance and low-temperature intermittent cycle performance of the electrochemical apparatus. When a ratio (d1/d2) of the thickness of the coating of the separator to the thickness of the separator is within the above range, the ratio of overall thicknesses of the coating to the separator falls within an appropriate range, which is more conducive to improving the fast-charging performance and low-temperature intermittent cycle performance of the electrochemical apparatus.

In one embodiment of this application, $9\ \mu m \leq d2 \leq 16\ \mu m$. For example, d2 may be 9 μm, 10 μm, 11 μm, 12 μm, 13 μm, 14 μm, 15 μm, 16 μm, or a value falling within a range formed by any two thereof.

In one embodiment of this application, the base film has an average pore size of r2 and a minimum pore size of r3, $0.03\ \mu m \leq r1 - r2 \leq 0.14\ \mu m$, and/or $0.010\ \mu m \leq r2 - r3 \leq 0.035\ \mu m$. For example, a difference r1-r2 between the maximum pore size and the average pore size of the base film may be 0.03 μm, 0.05 μm, 0.07 μm, 0.09 μm, 0.11 μm, 0.13 μm, 0.14 μm, and/or, a difference r2-r3 between the average pore size and the minimum pore size may be 0.010 μm, 0.015 μm, 0.020 μm, 0.025 μm, 0.030 μm, 0.035 μm, or a value falling within a range formed by any two thereof. The separator satisfying the above conditions has a more appropriate pore structure, thereby improving the infiltration of the electrolyte solution to the separator. During constant current charging, when the electrochemical apparatus is under overcharge conditions, pores of the separator as a whole will not be excessively large or numerous, thereby reducing the probability of overcharge caused by high-speed migration of the lithium ions and improving the overcharge test pass rate. When both r1-r2 and r2-r3 are controlled within the ranges of this application, the pore sizes on the separator become more uniform, and the overall stability of the electrochemical apparatus is improved, which is conducive to alleviating the problem that the temperature rise of the surface of the electrochemical apparatus is uneven due to relatively intense electrochemical reactions caused by excessively high flow rate of the electrolyte solution in a partial region, and thus conducive to further increasing the overcharge test pass rate and improving the fast-charging performance of the electrochemical apparatus.

In one embodiment of this application, $0.06\ \mu m \leq r1 \leq 0.22\ \mu m$. For example, the maximum pore size r1 of the base film may be 0.06 μm, 0.08 μm, 0.10 μm, 0.13 μm, 0.14 μm, 0.17 μm, 0.20 μm, 0.22 μm, or a value falling within a range formed by any two thereof. When the maximum pore size of the separator satisfies the above range, the pore sizes on the separator become more uniform. During overcharge testing, the separator is less prone to rupture, and the risk of a positive electrode contacting a negative active material and then causing a short circuit is reduced, thereby increasing the overcharge test pass rate. In addition, lithium ions have an appropriate transmission rate, and the electrolyte solution exhibits good infiltration to the separator.

In one embodiment of this application, $0.02\ \mu m \leq r2 \leq 0.1\ \mu m$. For example, r2 may be 0.02 μm, 0.03 μm, 0.04 μm,

0.05 μm, 0.06 μm, 0.07 μm, 0.08 μm, 0.09 μm, 0.1 μm, or a value falling within a range formed by any two thereof.

In one embodiment of this application, 0.009 μm ≤ r3 ≤ 0.04 μm. For example, r3 may be 0.009 μm, 0.01 μm, 0.015 μm, 0.02 μm, 0.025 μm, 0.03 μm, 0.035 μm, 0.04 μm, or a value falling within a range formed by any two thereof.

In one embodiment of this application, the base film includes at least one of polyethylene, polypropylene, polyvinylidene fluoride, polyethylene terephthalate, polyimide, or aramid. For example, the polyethylene includes at least one of high density polyethylene, low density polyethylene or ultra-high molecular weight polyethylene. In one embodiment of this application, the base film includes polyethylene and polypropylene. The obtained separator has a good effect for preventing short circuits and can improve the safety performance of the electrochemical apparatus through a shutdown effect.

In one embodiment of this application, 1 μm ≤ d3 ≤ 4 μm. For example, d3 may be 1 μm, 2 μm, 3 μm, 4 μm, or a value falling within a range formed by any two thereof.

In this application, separators with different r1, r2 and r3 may be obtained through purchase, and the desired separators with specific r1, r2 and r3 may be selected by combining a pore size testing method provided in this application.

In one embodiment of this application, the inorganic coating includes inorganic particles. The inorganic particles include at least one of boehmite, aluminum oxide, silica, zirconium oxide, titanium dioxide, magnesium oxide, mullite, silicon carbide, silicon nitride, boron nitride, or aluminum nitride. The inorganic coating further includes a binder. The binder is at least one selected from polyvinylidene fluoride, vinylidene fluoride hexafluoropropylene copolymer, polyamide, polyacrylonitrile, polyacrylate, polyacrylic acid, polyacrylate salt, sodium carboxymethyl cellulose, polyvinylpyrrolidone, polyvinyl ether, polytetrafluoroethylene, or polyhexafluoropropylene. The inorganic coating on the surface of the separator can improve the heat resistance, oxidation resistance and electrolyte infiltrating property of the separator and enhance the adhesive force between the separator and positive and negative electrode plates.

In one embodiment of this application, the inorganic coating includes inorganic particles and a binder. Based on the mass of the inorganic coating, a mass percentage of the inorganic particles is 80% to 99%, and a mass percentage of the binder is 1% to 20%.

In one embodiment of this application, the separator includes one layer of inorganic coating, two layers of organic coatings, and a base film. The inorganic coating is disposed on one side of the base film, the organic coatings are disposed on both sides of the base film, and the inorganic coating is located between the organic coating and the base film. In one embodiment of this application, the side of the base film provided with the inorganic coating faces the positive electrode.

In one embodiment of this application, the separator includes two layers of inorganic coatings, two layers of organic coatings, and a base film. The inorganic coatings are disposed on both sides of the base film, the organic coatings are disposed on both sides of the base film, and the inorganic coatings are located between the organic coatings and the base film.

A second aspect of this application provides an electrochemical apparatus. The electrochemical apparatus includes a positive electrode plate, a negative electrode plate, an electrolyte solution and the separator according to any one of the foregoing embodiments. Thus, the electrochemical apparatus provided in this application exhibits excellent fast-charging performance and low-temperature intermittent cycle performance.

In one embodiment of this application, the electrolyte solution includes an additive, and the additive includes a nitrile additive and a fluorine additive. The nitrile additive includes at least one of ethylene glycol bis(propionitrile) ether, adiponitrile or succinonitrile, and the fluorine additive includes at least one of fluoroethylene carbonate, difluoroethylene carbonate, trifluoropropylene carbonate, lithium bis(trifluoromethanesulphonyl)imide, or lithium bis(fluorosulfonyl)imide. Introducing the above additives into the electrolyte solution can reduce the temperature rise of the electrochemical apparatus under high-current conditions. When the electrolyte solution in the electrochemical apparatus satisfies the above conditions, the synergistic effect between the nitrile additive and the fluorine additive can form a solid electrolyte interface film with a heat absorption effect. The solid electrolyte interface film preferentially decomposes at the interface compared to conventional carbonate solvents, thereby reducing the heat generated by the oxidation and decomposition of the carbonate solvents and reducing the temperature rise of the electrochemical apparatus. Moreover, at high temperatures, the solid electrolyte interface film formed jointly by the nitrile additive and the fluorine additive can capture HF gas molecules at the interface, thereby improving the storage volume expansion rate of the electrochemical apparatus at high temperatures. Through the combined effect of the fluorine additive and the nitrile additive, a more stable electrolyte solution system can be provided, thereby reducing the oxidative decomposition heat generation of conventional carbonate solvents, reducing the temperature rise of the electrochemical apparatus, and improving the high-temperature storage volume expansion rate of the electrochemical apparatus by better capturing interface gases. Thus, through the mutual cooperation between the above electrolyte solution and the separator provided in this application, the fast-charging performance, low-temperature intermittent cycle performance, and high-temperature storage volume expansion rate of the electrochemical apparatus are all improved.

In one embodiment of this application, based on a total mass of the electrolyte solution, a mass percentage of the nitrile additive is W5, a mass percentage of the fluorine additive is W6, 1% ≤ W5 + W6 ≤ 8%, and 0.3% ≤ W5 ≤ 6%. For example, based on the total mass of the electrolyte solution, a sum W5+W6 of contents of the nitrile additive and the

fluorine additive may be 1%, 3%, 5%, 7%, 8%, or a value falling within a range formed by any two thereof. The mass percentage W5 of the nitrile additive may be 0.3%, 0.5%, 0.8%, 1%, 2%, 3%, 4%, 5%, 6%, or a value falling within a range formed by any two thereof. Introducing the above additives into the electrolyte solution and regulating W5+W6 and W5 within the above ranges can better suppress temperature rise in the electrochemical apparatus without affecting the function of the electrolyte solution as a lithium-ion transport medium. Moreover, an interface film jointly formed by the nitrile additive and the fluorine additive at high temperatures has the function of capturing HF gas molecules at the interface at high temperatures, thereby improving the high-temperature storage volume expansion rate of the electrochemical apparatus. Thus, through the mutual cooperation between the above electrolyte solution and the separator provided in this application, the fast-charging performance, low-temperature intermittent cycle performance, and high-temperature storage volume expansion rate of the electrochemical apparatus are all improved.

In one embodiment of this application, 0.5% ≤ W6 ≤ 7%. For example, W6 may be 0.5%, 0.8%, 1%, 2%, 3%, 4%, 5%, 6%, 7%, or a value falling within a range formed by any two thereof.

In one embodiment of this application, the electrolyte solution includes acetonitrile, and based on the total mass of the electrolyte solution, a mass percentage of the acetonitrile is W7, and 45% ≤ W7 - W5 ≤ 60%. For example, based on the total mass of the electrolyte solution, a content difference W7-W5 between the acetonitrile and the fluorine additive may be 45%, 47%, 49%, 51%, 53%, 55%, 57%, 59%, 60%, or a value falling within a range formed by any two thereof. By introducing the above additives into the electrolyte solution and regulating W7-W5 within the above range, the coexistence of the acetonitrile and the above nitrile additive can improve the transport rate of active ions such as lithium ions in the electrochemical apparatus, and promotes the preferential oxidative decomposition of the nitrile additive at the interface between the electrolyte solution and the positive electrode to form a solid electrolytic interfacial film with stable structure and performance. Moreover, due to the rapid ion-conducting properties of the acetonitrile, the interfacial impedance under high current density is improved, thereby reducing the temperature rise of the electrochemical apparatus under high-current conditions, reducing gas production at the interface of the electrochemical apparatus under high temperatures, and further improving the high-temperature storage expansion rate of the electrochemical apparatus.

In one embodiment of this application, 45.3% ≤ W7 ≤ 66%. For example, W7 may be 45.3%, 46%, 47%, 48%, 49%, 50%, 51%, 52%, 53%, 54%, 55%, 56%, 57%, 58%, 59%, 60%, 61%, 62%, 63%, 64%, 65%, 66%, or a value falling within a range formed by any two thereof.

The positive electrode plate is not particularly limited in this application, as long as the objectives of this application can be achieved. For example, the positive electrode plate typically includes a positive current collector and a positive active material layer. The positive current collector is not particularly limited, and may be any positive current collector in the art, for example, aluminum foil, aluminum alloy foil, or a composite current collector, etc. The positive active material layer includes a positive active material. The positive active material is not particularly limited, and may be any positive active material in the art, for example, it may include at least one of lithium nickel cobalt manganese oxide(811, 622, 523, 111), lithium nickel cobalt aluminum oxide, lithium iron phosphate, a lithium-rich manganese based material, lithium cobalt oxide, lithium manganese oxide, lithium manganese iron phosphate, or lithium titanate.

The thicknesses of the positive current collector and a positive electrode material layer are not particularly limited in this application, as long as the objectives of this application can be achieved. For example, a thickness of the positive current collector is 5 μm to 20 μm, and a thickness of the positive electrode material layer is 30 μm to 120 μm.

In this application, the positive electrode material layer may further include a positive conductive agent and a positive electrode binder. The types of the conductive agent and the binder are not particularly limited in this application, as long as the objectives of this application can be achieved. For example, the positive conductive agent may include, but is not limited to, at least one of conductive carbon black (Super P), carbon nanotubes (CNTs), carbon fibers, flake graphite, graphene, metal materials, or conductive polymers. The conductive carbon black may include, but is not limited to, at least one of acetylene black or Ketjen black. The carbon nanotubes may include, but are not limited to, single-walled carbon nanotubes and/or multi-walled carbon nanotubes. The carbon fibers may include, but are not limited to, vapor grown carbon fibers (VGCF) and/or carbon nanofibers. The metal material may include, but is not limited to, metal powder and/or metal fibers. Specifically, the metal may include, but is not limited to, at least one of copper, nickel, aluminum, or silver. The conductive polymer may include, but is not limited to, at least one of polyphenylene derivatives, polyaniline, polythiophene, polyacetylene, or polypyrrole. For example, the positive electrode binder may include, but is not limited to, at least one of polyacrylic acid, sodium polyacrylate, potassium polyacrylate, lithium polyacrylate, polyimide, polyvinyl alcohol, carboxymethylcellulose, sodium carboxymethyl cellulose, lithium carboxymethyl cellulose, polyimide, polyamideimide, styrene-butadiene rubber, or polyvinylidene difluoride. The mass percentages of the positive active material, conductive agent, or binder in the positive electrode material layer are not particularly limited herein, and may be selected by a person skilled in the art as actually required, as long as the objectives of this application can be achieved.

The negative electrode plate in this application is not particularly limited as long as the object of this application can be achieved. For example, the negative electrode plate typically includes a negative current collector and a negative active material layer. The negative current collector is not particularly limited, and may be any negative current collector in the art, for example, copper foil, aluminum foil, aluminum alloy foil, or a composite current collector, etc. The negative active

material layer includes a negative active material. The negative active material is not particularly limited, and may be any negative active material in the art. For example, the negative active material may include at least one of artificial graphite, natural graphite, mesocarbon microbeads, soft carbon, hard carbon, silicon, silicon-carbon, lithium titanate, or the like.

In this application, a negative electrode material layer may further include a negative conductive agent and a negative electrode binder. The types of the negative conductive agent and the negative electrode binder are not particularly limited in this application, as long as the objectives of this application can be achieved. For example, the negative conductive agent and the negative electrode binder may be at least one of the above positive conductive agent and the above positive electrode binder. A mass ratio of the negative active material to the negative conductive agent to the negative electrode binder in the negative electrode material layer is not particularly limited in this application, and may be selected by a person skilled in the art according to actual needs, as long as the objectives of this application can be achieved.

The thickness of the negative electrode material layer is not particularly limited in this application, as long as the objectives of this application can be achieved. For example, a thickness of the negative electrode material layer is 30 μm to 120 μm. The thickness of the negative current collector is not particularly limited in this application, as long as the objectives of this application can be achieved. For example, a thickness of the negative current collector is 4 μm to 15 μm.

The electrolyte solution of this application further includes a lithium salt and a non-aqueous solvent.

In some embodiments of this application, the lithium salt is selected from one or more of $LiPF_6$, $LiBF_4$, $LiAsF_6$, $LiClO_4$, $LiB(C_6H_5)_4$, $LiCH_3SO_3$, $LiCF_3SO_3$, $LiC(SO_2CF_3)_3$, $LiSiF_6$, LiBOB or lithium difluoroborate. The content of the lithium salt in the electrolyte solution is not particularly limited in this application, as long as the objectives of this application can be achieved. For example, based on a mass of the electrolyte solution, a mass percentage of the lithium salt is 8% to 15%.

The non-aqueous solvent may be a carbonate compound, a carboxylate compound, an ether compound, other organic solvents, or a combination thereof.

The foregoing carbonate compound may be a chain carbonate compound, a cyclic carbonate compound, a fluorocarbonate compound, or a combination thereof.

Examples of the above chain carbonate compounds are dimethyl carbonate (DMC), diethyl carbonate (DEC), dipropyl carbonate (DPC), methyl propyl carbonate (MPC), ethyl propyl carbonate (EPC), methyl ethyl carbonate (MEC), and a combination thereof. Examples of the cyclic carbonate compound are ethylene carbonate (EC), propylene carbonate (PC), butylene carbonate (BC), vinyl ethylene carbonate (VEC) and a combination thereof. Examples of the fluorocarbonate compound are fluoroethylene carbonate (FEC), 1, 2-difluoroethylene carbonate, 1, 1-difluoroethylene carbonate, 1, 1, 2-trifluoroethylene carbonate, 1, 1, 2, 2-tetrafluoroethylene carbonate, 1-fluoro-2-methylethylene carbonate, 1-fluoro-1-methylethylene carbonate, 1, 2-difluoro-1-methylethylene carbonate, 1, 1, 2-trifluoro-2-methylethylene carbonate, trifluoromethylethylene carbonate, and a combination thereof.

Examples of the foregoing carboxylate compound are methyl formate, methyl acetate, ethyl acetate, n-propyl acetate, tert-butyl acetate, methyl propionate, ethyl propionate, propyl propionate, γ-butyrolactone, decalactone, valerolactone, mevalonic acid lactone, caprolactone, and a combination thereof.

Examples of the above ether compound are dibutyl ether, tetraglyme, diglyme, 1, 2-dimethoxyethane, 1, 2-diethoxyethane, ethoxymethoxyethane, 2-methyl tetrahydrofuran, tetrahydrofuran, and a combination thereof.

Examples of the foregoing other organic solvents are dimethyl sulfoxide, 1,2-dioxolane, sulfolane, methyl sulfolane, 1,3-dimethyl-2-imidazolidone, N-methyl-2-pyrrolidone, formamide, dimethylformamide, acetonitrile, trimethyl phosphate, triethyl phosphate, trioctyl phosphate, phosphate, and a combination thereof.

The content of the non-aqueous solvent in the electrolyte solution is not particularly limited in this application, as long as the objectives of this application can be achieved. For example, based on the mass of the electrolyte solution, a mass percentage of the non-aqueous solvent is 11% to 92%.

In one embodiment of this application, the electrolyte solution includes the lithium salt and the non-aqueous solvent, where the mass percentage of the lithium salt is as described above, and the mass percentage of the non-aqueous solvent is 85% to 92%. The electrochemical apparatus including the above electrolyte solution exhibits improved fast-charging performance and low-temperature intermittent cycle performance.

In one embodiment of this application, the electrolyte solution includes an additive, a lithium salt and a non-aqueous solvent. The additive includes the above nitrile additive and the above fluorine additive. Mass percentages of the nitrile additive, the fluorine additive and the lithium salt are as described above, and a mass percentage of the non-aqueous solvent is 77% to 91%. The electrochemical apparatus including the above electrolyte solution exhibits improved fast-charging performance, low-temperature intermittent cycle performance, and high-temperature storage volume expansion rate.

In one embodiment of this application, the electrolyte solution includes an additive, acetonitrile, a lithium salt and a non-aqueous solvent. The additive includes the above nitrile additive and the above fluorine additive. Mass percentages of the nitrile additive, the fluorine additive, the acetonitrile and the lithium salt are as described above, and a mass percentage of the non-aqueous solvent ranges from 11% to 54%. The electrochemical apparatus including the above

electrolyte solution exhibits improved fast-charging performance, low-temperature intermittent cycle performance, and high-temperature storage volume expansion rate.

In one embodiment of this application, taking a lithium-ion battery as an example, a positive electrode plate, a separator and a negative electrode plate are wound or stacked in sequence to form an electrode assembly, which is then placed into a housing such as an aluminum laminated film for encapsulation. After injecting an electrolyte solution, chemical formation, and final encapsulation, the lithium-ion battery is manufactured.

A third aspect of this application provides an electrical apparatus. The electrical apparatus includes the electrochemical apparatus according to any one of the foregoing embodiments.

The type of the electrical apparatus is not particularly limited in this application, and may be any electrical apparatus known in the prior art. In some embodiments of this application, the electrical apparatus may include, but is not limited to, a notebook computer, a pen-input computer, a mobile computer, an electronic book player, a portable phone, a portable fax machine, a portable copier, a portable printer, a stereo headset, a video recorder, a liquid crystal television, a hand-held cleaner, a portable CD machine, a mini disc, a transceiver, an electronic organizer, a calculator, a memory card, a portable audio recorder, a radio, a backup power supply, a motor, an automobile, a motorcycle, a power bicycle, a bicycle, a lighting appliance, a toy, a game machine, a clock, an electric tool, a flash light, a camera, a large household storage battery, a lithium-ion capacitor, or the like.

## Embodiments

Hereinafter, embodiments and comparative embodiments are given to more specifically describe the implementations of this application. Various tests and evaluations were performed as follows. In addition, "parts" and "% " are on a mass basis unless otherwise specified.

### Test methods and devices:

### Fast-charging test:

Step 1: In a 25°C environment, performing constant current charging on a lithium-ion battery at a 2C charging current until the upper limit voltage reaches 4.3 V. Letting the fully charged lithium-ion battery stand for 2 h, then discharging the battery at a 0.5C discharging current to 2.0 V, and recording the discharge capacity during 2C charging.

Step 2: In a 25°C environment, performing constant current charging on a lithium-ion battery at a 1/3C charging current until the upper limit voltage reaches 4.3V. Letting the fully charged lithium-ion battery stand for 2h, then discharging the battery at a 0.5C discharging current to 2.0V, and recording the discharge capacity during 1/3C charging.

Performing Step 1 and Step 2 operations sequentially on the lithium-ion batteries prepared in embodiments and comparative embodiments, then calculating the rate charging capacity retention rate of the lithium-ion battery using the following expression:

2C rate charging retention rate of lithium-ion battery = (Discharge capacity of lithium-ion battery during 2C charging / Discharge capacity of lithium-ion battery during 1/3C charging) $\times$ 100%.

### Capacity retention rate test after 400 cycles at -15°C:

Step 1: In a -15°C environment, performing the first charge on the lithium-ion battery: performing constant current charging at a 0.7C charging current until the upper voltage limit reaches 4.3 V, then performing constant voltage charging at 4.3 V until the current drops to 0.05 C, recording the thickness D0 of the fully charged lithium-ion battery, letting the fully charged lithium-ion battery stand, and ensuring that a total time of constant current charging, constant voltage charging, and standing time equals 24 h.

Step 2: In a -15°C environment, discharging at a 0.5C rate to 2.0 V, recording the discharge capacity of the first cycle, and then letting the battery stand for 2 h.

Step 3: In a -15°C environment, charging the lithium-ion battery: performing constant current charging at a 0.7C charging current until the upper voltage limit reaches 4.3 V, then performing constant voltage charging at 4.3 V until the current drops to 0.05 C, letting the fully charged lithium-ion battery stand for 2 h, and ensuring that the total time of constant current charging, constant voltage charging, and standing time equals 24 h.

Step 4: In a -15°C environment, discharging at a 0.5C rate to 2.0 V, and then letting the battery stand for 1 h.

Step 5: Repeating the above Steps 3 to 4 for 399 cycles, recording the discharge capacity at the 399th cycle of the lithium-ion battery, and then calculating the low-temperature capacity retention rate of the lithium-ion battery under a -15°C condition using the following expression:

Cycle capacity retention rate = (Discharge capacity at the 400th cycle / Discharge capacity at the first cycle) × 100%, recorded as "-15°C intermittent cycle capacity retention rate".

**Gas production test:**

At 25°C, performing constant current charging at a current value of 1 C until the voltage reaches 4.3 V, and then performing constant voltage charging at 4.3 V until the current is 0.05 C. Then, storing the charged lithium-ion battery in a constant-temperature chamber at 25°C for 2 hours, and performing constant current discharging with a discharging current of 0.1 C until the final voltage reaches 2.0 V, thereby forming one charge-discharge cycle. Performing three cycles and measuring a gas production of the lithium-ion battery during the three cycles. The gas production is used to evaluate the storage characteristics of the lithium-ion battery. The gas production may be measured using an in-situ gas production tester, specifically, the gas production is determined by testing the volume change of the lithium-ion battery.

**Infiltration test:**

At 25°C in a glove box, using a pipette with a range of 1μL to 5μL to fill 5mL of electrolyte solutions of the lithium-ion battery prepared in the embodiments and comparative embodiments, dropping the electrolyte solutions onto the separator, respectively, and recording the times required for the electrolyte solutions to be completely absorbed by the electrode plate.

**Overcharge test pass rate:**

3C-5V Overcharge test: Under the condition of an ambient temperature of 25±5°C, discharging the lithium-ion battery to 2.0 V at a 0.5C discharging current, charging the discharged lithium-ion battery at a 3C constant current to 5.0 V, then changing at a 5V constant voltage charging, and limiting constant voltage charging time to 6 hours or stopping charging when the temperature difference of the surface of the lithium-ion battery is ≤2°C within 45 minutes. Evaluation criterion: The lithium-ion battery passes the test if it does not catch fire. 20 lithium-ion batteries were tested for each embodiment and comparative embodiment. Overcharge test pass rate = Number of passed lithium-ion batteries / 20 ×100%.

**Charging temperature rise test:**

Step 1: In a 25°C environment, performing constant current charging on the lithium-ion battery at a 0.5C current until the upper limit voltage reaches 4.3 V, and recording the surface temperature T1 of the lithium-ion battery. Then discharging at a 0.5C discharging current to 2.0 V, and letting it stand until the surface temperature of the lithium-ion battery reaches 25°C.

Step 2: Performing constant current charging at a 6C charging current until the upper limit voltage reaches 4.3 V, continuing charging for 5 hours, and recording the surface temperature T2 of the lithium-ion battery after charging to the upper limit voltage of 4.3 V.

Performing Step 1 and Step 2 operations sequentially on the lithium-ion batteries prepared in embodiments and comparative embodiments, and then calculating the temperature rise degree of the surface of the lithium-ion battery using the following expression:

6C Charging temperature rise of lithium-ion battery = Surface temperature T2 of lithium-ion battery at 6C - Surface temperature T1 of lithium-ion battery when charged at 0.5 C.

**High-temperature storage volume expansion test:**

Placing the lithium-ion battery in a 25°C constant-temperature test chamber, performing constant current charging at 1 C to 4.3 V, then performing constant voltage charging at 4.3 V until the cutoff current reaches 0.1 C, followed by constant current discharging at 0.5 C to 2.0 V, and recording it as the initial discharge capacity of the lithium-ion battery. Then charging at a 1C constant current to 4.3 V, followed by constant voltage charging at 4.3 V until the cutoff current reaches 0.1 C. Taking out the lithium-ion battery, testing the volume of the lithium-ion battery and recording it as the initial volume of the lithium-ion battery. Then transferring the lithium-ion battery to an 85°C environment and letting it stand for 12 hours. Measuring the volume of the lithium-ion battery again and recording it as the volume of the lithium-ion battery after high-temperature storage. Placing the lithium-ion battery in a 25°C constant-temperature test chamber and letting it stand until the lithium-ion battery reaches the constant temperature of 25°C. Then discharging at a 0.5C constant current to

2.0 V, and recording the discharge capacity as the discharge capacity of the lithium-ion battery after high-temperature storage. Calculating the high-temperature storage volume change rate using the following expression:

High-temperature storage volume expansion rate = (Volume of lithium-ion battery after high-temperature storage - Initial volume of lithium-ion battery) / Initial volume of lithium-ion battery × 100%.

**Method for measuring mass percentages of carbon element and fluorine element in the organic coating:**

Using SEM to select a 10μm×5μm region of the organic coating for X-ray energy dispersive spectroscopy (EDS) testing. Selecting 3 positions and calculating the average value to determine the mass percentages of carbon element and fluorine element.

**Measurement of components in electrolyte solution:**

Testing the electrolyte solution using gas chromatography-mass spectrometry (GC-MS) and an external standard method to obtain the mass percentages of the components in the electrolyte solution.

**Pore size testing:**

Disassembling the lithium-ion battery to obtain the separator. Ultrasonically cleaning the organic coating and the inorganic coating on the surface of the separator using dimethyl carbonate (DMC), then drying to obtain the base film, and testing the pore size distribution of the base film using a pore size distribution analyzer to obtain the maximum pore size r1, average pore size r2, and minimum pore size r3 of the base film.

**Embodiment 1-1**

<Preparing a positive electrode plate>

Mixing lithium cobalt oxide as a positive active material, acetylene black and polyvinylidene difluoride (PVDF) at a mass ratio of 94: 3: 3, then adding N-methyl-pyrrolidone (NMP) as a solvent to form a slurry in which the solid content is 75%, and stirring uniformly. Uniformly coating a surface of 12-μm aluminum foil with the slurry, drying the same at 90 °C, and performing cold-calendering to obtain a positive electrode plate with a 42-μm thick positive active material layer. Performing the above steps again on the other surface of the positive electrode plate to obtain a positive electrode plate with both surface coated with positive active material layers. Cutting the positive electrode plate into a size of 74 mm × 867 mm, and welding a tab onto the positive electrode plate for use.

<Preparing a negative electrode plate>

Mixing artificial graphite as a negative active material, acetylene black, styrene-butadiene rubber and sodium carboxymethyl cellulose at a mass ratio of 96: 1: 1.5: 1.5, then adding deionized water as a solvent to form a slurry in which the solid content is 70%, and stirring uniformly. Uniformly coating a surface of 8-μm thick copper foil with the slurry, drying the same at 110 °C, and performing cold-calendering to obtain a negative electrode plate with a 54.5-μm negative active material layer on one surface. Performing the above coating steps again on the other surface of the negative electrode plate to obtain a negative electrode plate with both surfaces coated with negative active material layers. Cutting the negative electrode plate into a size of 74 mm x 867 mm and welding a tab to the negative electrode plate for use.

<Preparing an electrolyte solution>

Mixing ethylene carbonate (EC), dimethyl carbonate (DMC), and ethyl methyl carbonate (EMC) as non-aqueous organic solvents at a mass ratio of 2: 5: 3 in an environment in which the moisture content is less than 10 ppm. Subsequently, adding lithium hexafluorophosphate ($LiPF_6$) into the non-aqueous organic solvents for dissolving, and mixing uniformly to obtain an electrolyte solution, where based on the mass of the electrolyte solution, a mass percentage of $LiPF_6$ is 9%.

<Preparing a separator>

Preparing an inorganic coating:

Adding boehmite with an average particle diameter Dv50 of 1 μm and a binder polyacrylate to a mixer at a mass ratio of 85:15, stirring and mixing uniformly, then adding deionized water and stirring to achieve a solid content of 48%, and obtaining a slurry B. Uniformly applying the above slurry B onto one surface of the base film via gravure roll coating at a speed of 0.6 m/min, and then drying the same by blowing hot air at 120°C with a wind speed of 0.5 m/sec. Selecting a polyethylene (PE) microporous membrane with a thickness of 6 μm as the base film, with the thickness d3 of the inorganic coating being 3 μm.

Preparing an organic coating:

A mass ratio of a first polymer to a second polymer to sodium carboxymethyl cellulose to dimethylsiloxane is 50:45:0.7:4.3. Using polypropylene with a melt flow index of 8 g/10min as the first polymer and polyvinylidene fluoride with a melt flow index of 1 g/10min as the second polymer, and adding the first polymer and second polymer to a mixer, stirring and mixing uniformly, then adding the sodium carboxymethyl cellulose to the mixer, and stirring uniformly. Adding dimethylsiloxane as a wetting agent into the mixer, then adding deionized water and stirring to adjust the slurry viscosity to 38 mPa•s with a solid content of 5%, and obtaining a slurry A. Uniformly applying the slurry A onto one surface of the inorganic coating, drying the same in an oven, then applying the slurry A onto the other surface of the base film, and drying the same to obtain the separator. The thickness d1 of the organic coating is 2 μm, and the thickness d2 of the separator is 13 μm.

<Preparation of a lithium-ion battery>

Stacking the prepared positive electrode plate, separator, and negative electrode plate in sequence, with the side of the separator provided with the inorganic coating facing the positive electrode plate, and winding them to form an electrode assembly. Putting the electrode assembly into an aluminum laminated film packaging bag, dehydrating the electrode assembly at 80°C, and then injecting the prepared electrolyte solution. Performing steps such as vacuum sealing, standing, chemical formation, and shaping to obtain a lithium-ion battery. The chemical formation upper limit voltage is 4.15 V, the chemical formation temperature is 70°C, and the chemical formation standing time is 2 h.

**Embodiment 1-2**

Identical to Embodiment 1-1 except that in <Preparing an organic coating>, the first polymer is changed to polyvinylidene fluoride (melt flow index of 8 g/10min), the second polymer is changed to polyhexafluoropropylene (melt index of 1 g/10min), and the relevant preparation parameters are adjusted according to Table 1.

**Embodiment 1-3 to Embodiment 1-14**

Identical to Embodiment 1-1 except that the relevant preparation parameters are adjusted according to Table 1.

**Embodiment 2-1 to Embodiment 2-13**

Identical to Embodiment 1-1 except that the relevant preparation parameters are adjusted according to Table 2.

**Embodiment 3-1**

Identical to Embodiment 1-1 except that in <Preparing an electrolyte solution>, a nitrile additive and a fluorine additive are added according to Table 3. When the sum W5+W6 of contents of the nitrile additive and the fluorine additive changes, the content of an organic solvent changes accordingly, and a mass percentage of $LiPF_6$ remains unchanged.

<Preparing an electrolyte solution>

Mixing ethylene carbonate (EC), dimethyl carbonate (DMC), and ethyl methyl carbonate (EMC) as non-aqueous organic solvents at a mass ratio of 2: 5: 3 in an environment in which the moisture content is less than 10 ppm to obtain a basic solvent. Adding ethylene glycol bis(propionitrile) ether, fluoroethylene carbonate, and lithium hexafluorophosphate ($LiPF_6$) to the basic solvent and stirring uniformly to obtain the electrolyte solution. Based on the mass of the electrolyte solution, a mass percentage of $LiPF_6$ is 9%; a mass percentage of the ethylene glycol bis(propionitrile) ether is 2%; and a mass percentage of the fluoroethylene carbonate is 2%.

**Embodiment 3-2 to Embodiment 3-8**

Identical to Embodiment 3-1 except that the relevant preparation parameters are adjusted according to Table 3.

**Embodiment 3-9**

Identical to Embodiment 3-1 except that in <Preparing an electrolyte solution>, acetonitrile is added according to Table 3. When a mass percentage W7 of the acetonitrile changes, the content of an organic solvent changes accordingly, and a mass percentage content of $LiPF_6$ remains unchanged.

<Preparing an electrolyte solution>

Mixing ethylene carbonate (EC), dimethyl carbonate (DMC), and ethyl methyl carbonate (EMC) as non-aqueous organic solvents at a mass ratio of 2: 5: 3 in an environment in which the moisture content is less than 10 ppm to obtain a basic solvent. Adding ethylene glycol bis(propionitrile) ether, fluoroethylene carbonate, acetonitrile, and lithium hexafluorophosphate ($LiPF_6$) to the basic solvent and stirring uniformly to obtain the electrolyte solution. Based on the mass of the electrolyte solution, a mass percentage of LiPF6 is 9%; a mass percentage of the ethylene glycol bis(propionitrile) ether is 2%; a mass percentage of the fluoroethylene carbonate is 2%; and a mass percentage of the acetonitrile is 55%.

**Embodiment 3-10 and Embodiment 3-15**

Identical to Embodiment 3-9 except that the relevant preparation parameters are adjusted according to Table 3. When a sum of contents W5+W6 of a nitrile additive and a fluorine additive and a mass percentage W7 of acetonitrile change, the content of an organic solvent changes accordingly, and a mass percentage of $LiPF_6$ remains unchanged.

**Comparative Embodiment 1 and Comparative Embodiment 2**

Identical to Embodiment 1-1 except that W1/W2 is adjusted according to Table 1.

**Comparative Embodiment 3 and Comparative Embodiment 4**

Identical to Embodiment 1-1 except that the relevant preparation parameters are adjusted according to Table 2.

The preparation parameters and test results of each embodiment and comparative embodiment are shown in Tables 1 to 3:

Table 1

| | W3 (%) | W4 (%) | W1 (%) | W2 (%) | W1/ W2 | d1 (μm) | d3 (μm) | d2 (μm) | dl/d2 | 2C rate charging retention rate (%) | Gas production (μL) | -15°C intermittent cycle capacity retention rate (%) |
|---|---|---|---|---|---|---|---|---|---|---|---|---|
| Embodiment 1-1 | 50 | 45 | 60.1 | 28.55 | 2.11 | 2 | 3 | 13 | 0.15 | 82.9 | 7.9 | 92.1 |
| Embodiment 1-2 | 50 | 45 | 29.8 | 65.7 | 0.45 | 2 | 3 | 13 | 0.15 | 82.7 | 8.1 | 91.9 |
| Embodiment 1-3 | 40 | 55 | 55.3 | 34.45 | 1.61 | 2 | 3 | 13 | 0.15 | 82.3 | 8.3 | 91.7 |
| Embodiment 1-4 | 35 | 60 | 52.9 | 37.4 | 1.41 | 2 | 3 | 13 | 0.15 | 81.9 | 8.5 | 91.2 |
| Embodiment 1-5 | 60 | 35 | 64.9 | 22.65 | 2.87 | 2 | 3 | 13 | 0.15 | 81.7 | 9.1 | 91 |
| Embodiment 1-6 | 70 | 25 | 69.7 | 16.75 | 4.16 | 2 | 3 | 13 | 0.15 | 81.1 | 9.4 | 90.5 |

(continued)

| | W3 (%) | W4 (%) | W1 (%) | W2 (%) | W1/ W2 | d1 (μm) | d3 (μm) | d2 (μm) | dl/d2 | 2C rate charging retention rate (%) | Gas production (μL) | -15°C intermittent cycle capacity retention rate (%) |
|---|---|---|---|---|---|---|---|---|---|---|---|---|
| Embodiment 1-7 | 75 | 20 | 72.1 | 13.8 | 5.22 | 2 | 3 | 13 | 0.15 | 80.6 | 10.9 | 89.6 |
| Embodiment 1-8 | 50 | 45 | 60.1 | 28.55 | 2.11 | 1 | 2 | 10 | 0.10 | 79.6 | 12.1 | 88.5 |
| Embodiment 1-9 | 50 | 45 | 60.1 | 28.55 | 2.11 | 4 | 2 | 16 | 0.25 | 79.9 | 11.9 | 89.1 |
| Embodiment 1-10 | 50 | 45 | 60.1 | 28.55 | 2.11 | 1 | 1 | 9 | 0.11 | 81.1 | 9.4 | 89.9 |
| Embodiment 1-11 | 50 | 45 | 60.1 | 28.55 | 2.11 | 3 | 2 | 14 | 0.21 | 81.5 | 10.5 | 90.3 |
| Embodiment 1-12 | 50 | 45 | 60.1 | 28.55 | 2.11 | 2 | 4 | 14 | 0.14 | 80.4 | 12 | 88.1 |
| Embodiment 1-13 | 50 | 45 | 60.1 | 28.55 | 2.11 | 1 | 4.5 | 12.5 | 0.08 | 79.8 | 12.5 | 87.5 |
| Embodiment 1-14 | 50 | 45 | 60.1 | 28.55 | 2.11 | 5 | 1 | 17 | 0.29 | 79.1 | 12.8 | 87.3 |
| Comparative Embodiment 1 | 20 | 75 | 25.6 | 70.8 | 0.36 | 2 | 3 | 13 | 0.15 | 72.1 | 20.4 | 82.5 |
| Comparative Embodiment 2 | 80 | 15 | 74.5 | 10.85 | 6.87 | 2 | 3 | 13 | 0.15 | 71.5 | 19.5 | 81.3 |

It can be seen from Embodiment 1-1 to Embodiment 1-7, Comparative Embodiment 1 and Comparative Embodiment 2 in table 1 that when the mass ratio W1/W2 of the carbon element to the fluorine element of the coating of the separator is within the range of this application, the obtained lithium-ion battery has higher 2C rate charge retention rate and - 15°C intermittent cycle capacity retention rate, indicating that the fast-charging performance and low-temperature intermittent cycle performance of the lithium-ion battery are improved.

The ratio d1/d2 of the thickness of the coating of the separator to the thickness of the separator and the thickness d1 of the organic coating usually affect the overall structural stability of the separator, thereby affecting the fast-charging performance and low-temperature intermittent cycle performance of the lithium-ion battery. It can be seen from Embodiment 1-1, and Embodiment 1-8 to Embodiment 1-14 that when the ratio d1/d2 of the thickness of the coating of the separator to the thickness of the separator and the thickness d1 of the organic coating are within the ranges of this application, the obtained lithium-ion battery has higher 2C rate charge retention rate and -15°C intermittent cycle retention rate, indicating that the fast-charging performance and low-temperature intermittent cycle performance of the lithium-ion battery are improved.

Table 2

| | r1(μm) | r2(μm) | r1-r2(μm) | r3(μm) | r2-r3(μm) | d3(μm) | rl/d3 | Infiltrating test time (s) | Overcharge test pass rate (%) |
|---|---|---|---|---|---|---|---|---|---|
| Embodiment 1-1 | 0.061 | 0.031 | 0.030 | 0.021 | 0.010 | 3.00 | 0.02 | 8.1 | 85 |

(continued)

| | r1(μm) | r2(μm) | r1-r2(μm) | r3(μm) | r2-r3(μm) | d3(μm) | rl/d3 | Infiltrating test time (s) | Overcharge test pass rate (%) |
|---|---|---|---|---|---|---|---|---|---|
| Embodiment 2-1 | 0.085 | 0.035 | 0.050 | 0.021 | 0.014 | 3.00 | 0.03 | 6.9 | 90 |
| Embodiment 2-2 | 0.101 | 0.041 | 0.060 | 0.025 | 0.016 | 3.00 | 0.03 | 6.7 | 95 |
| Embodiment 2-3 | 0.126 | 0.046 | 0.080 | 0.025 | 0.021 | 3.00 | 0.04 | 7.1 | 95 |
| Embodiment 2-4 | 0.152 | 0.052 | 0.100 | 0.028 | 0.024 | 3.00 | 0.05 | 7.2 | 95 |
| Embodiment 2-5 | 0.168 | 0.058 | 0.110 | 0.030 | 0.028 | 3.00 | 0.06 | 6.9 | 95 |
| Embodiment 2-6 | 0.181 | 0.061 | 0.120 | 0.031 | 0.030 | 3.00 | 0.06 | 6.5 | 95 |
| Embodiment 2-7 | 0.204 | 0.069 | 0.135 | 0.037 | 0.032 | 3.00 | 0.07 | 6.4 | 100 |
| Embodiment 2-8 | 0.211 | 0.071 | 0.140 | 0.036 | 0.035 | 2.00 | 0.11 | 6.1 | 95 |
| Embodiment 2-9 | 0.198 | 0.069 | 0.129 | 0.038 | 0.031 | 5.00 | 0.04 | 7.5 | 90 |
| Embodiment 2-10 | 0.208 | 0.07 | 0.138 | 0.037 | 0.033 | 6.00 | 0.03 | 7.6 | 85 |
| Embodiment 2-11 | 0.143 | 0.047 | 0.096 | 0.024 | 0.023 | 1.00 | 0.14 | 6.9 | 80 |
| Embodiment 2-12 | 0.171 | 0.021 | 0.150 | 0.009 | 0.012 | 1.10 | 0.16 | 7.9 | 80 |
| Embodiment 2-13 | 0.224 | 0.081 | 0.143 | 0.043 | 0.038 | 2.00 | 0.11 | 8.1 | 80 |
| Comparative Embodiment 3 | 0.030 | 0.019 | 0.011 | 0.009 | 0.010 | 3 | 0.01 | 8.2 | 80 |
| Comparative Embodiment 4 | 0.720 | 0.019 | 0.701 | 0.010 | 0.009 | 3 | 0.24 | 8.4 | 75 |

It can be seen from Embodiment 1-1 and Embodiment 2-1 to Embodiment 2-13 that when the difference r1-r2 between the maximum pore size and the average pore size, the difference r2-r3 between the average pore size and the minimum pore size, and the maximum pore size r1 of the base film fall are within the ranges of this application, the obtained lithium-ion battery exhibits shorter infiltrating time and higher overcharge test pass rate, indicating that the infiltration of the separator is improved and the overcharge phenomena of the lithium-ion battery are reduced.

The ratio r1/d3 of the thickness of the first coating to the maximum pore size of the separator typically affects the structural stability of the separator material, thereby affecting the structural stability of the positive electrode, subsequently affecting electron transport on the surface of the active material and lithium-ion shuttling between the positive and negative electrodes, and ultimately affecting the overcharge test pass rate of the electrochemical apparatus. It can be seen from Embodiment 1-1, Embodiment 2-1 to Embodiment 2-13, Comparative Embodiment 3 and Comparative Embodiment 4 that when the ratio r1/d3 of the thickness of the first coating of the separator to the maximum pore size is within the range of this application, the obtained lithium-ion battery exhibits shorter infiltrating time and higher overcharge test pass rate, indicating that the infiltration of the separator is improved and the overcharge phenomena of the lithium-ion battery are reduced.

Table 3

| | Type of nitrile additive | W5 (%) | Type of fluorine additive | W6(%) | W7 (%) | W7-W5(%) | W5+W6(%) | 6C charging temperature rise (°C) | Volume expansion rate (%) during high-temperature storage at 85°C |
|---|---|---|---|---|---|---|---|---|---|
| Embodiment 1-1 | / | / | / | / | / | / | / | 8.5 | 7.6 |
| Embodiment 3-1 | Ethylene glycol bis(propionitrile) ether | 2 | Fluoroethylene carbonate | 2 | / | / | 4 | 7.2 | 5.2 |
| Embodiment 3-2 | Succinonitrile | 2 | Fluoroethylene carbonate | 2 | / | / | 4 | 7.4 | 5.5 |
| Embodiment 3-3 | Ethylene glycol bis(propionitrile) ether | 2 | Difluoroethylene carbonate | 2 | / | / | 4 | 7.2 | 5.3 |
| Embodiment 3-4 | Ethylene glycol bis(propionitrile) ether | 2 | Lithium bis(trifluoromethanesulphonyl)imide | 2 | / | / | 4 | 8.1 | 6.7 |
| Embodiment 3-5 | Ethylene glycol bis(propionitrile) ether | 0.3 | Fluoroethylene carbonate | 2 | / | / | 2.3 | 7.5 | 5.5 |
| Embodiment 3-6 | Ethylene glycol bis(propionitrile) ether | 6 | Fluoroethylene carbonate | 2 | / | / | 8 | 7.8 | 5.7 |
| Embodiment 3-7 | Ethylene glycol bis(propionitrile) ether | 0.5 | Fluoroethylene carbonate | 0.5 | / | / | 1 | 7.5 | 5.6 |
| Embodiment 3-8 | Ethylene glycol bis(propionitrile) ether | 4 | Fluoroethylene carbonate | 4 | / | / | 8 | 6.9 | 4.8 |
| Embodiment 3-9 | Ethylene glycol bis(propionitrile) ether | 2 | Fluoroethylene carbonate | 2 | 55 | 53 | 4 | 6.5 | 4.6 |

| | | | | | | | | | | |
|---|---|---|---|---|---|---|---|---|---|---|
| Embodiment 3-10 | Ethylene glycol bis(propionitrile) ether | 2 | Fluoroethylene carbonate | 2 | 47 | 45 | 4 | 6.6 | 4.9 |
| Embodiment 3-11 | Ethylene glycol bis(propionitrile) ether | 2 | Fluoroethylene carbonate | 2 | 62 | 60 | 4 | 6.8 | 4.8 |
| Embodiment 3-12 | Ethylene glycol bis(propionitrile) ether | 0.2 | Fluoroethylene carbonate | 2 | 55.2 | 55 | 0.5 | 8.0 | 7.0 |
| Embodiment 3-13 | Ethylene glycol bis(propionitrile) ether | 7 | Fluoroethylene carbonate | 2 | 57 | 50 | 9 | 8.2 | 7.3 |
| Embodiment 3-14 | Ethylene glycol bis(propionitrile) ether | 2 | Fluoroethylene carbonate | 2 | 67 | 65 | 4 | 8.4 | 7.5 |
| Embodiment 3-15 | Ethylene glycol bis(propionitrile) ether | 2 | Fluoroethylene carbonate | 2 | 42 | 40 | 4 | 8.4 | 7.7 |

Note: "/" in Table 3 indicates that the relevant preparation parameter does not exist.

It can be seen from Embodiment 1-1, Embodiment 3-1, Embodiment 3-5 to Embodiment 3-8, and Embodiment 3-12 to Embodiment 3-13 that when the sum W5+W6 of the contents of the nitrile additive and the fluorine additive and the mass percentage W5 of the nitrile additive are within the ranges of this application, the obtained lithium-ion battery exhibits smaller 6C charging temperature rise and high-temperature storage volume expansion rate, indicating that the electrochemical performance of the lithium-ion battery under high temperature and high current density is improved.

It can be seen from Embodiment 1-1 and Embodiment 3-1 to Embodiment 3-4 that when the types of the nitrile additive and the fluorine additive are within the ranges of this application, the obtained lithium-ion battery exhibits better 6C charging temperature rise and high-temperature storage volume expansion rate, indicating that the electrochemical performance of the lithium-ion battery under high temperature and high current density is improved.

It can be seen from Embodiment 3-1 and Embodiment 3-9 to Embodiment 3-15 that the acetonitrile exhibits excellent synergistic compatibility with the nitrile additive, the fluorine additive, and the propylene carbonate. When the difference W7-W5 between the mass percentage of the acetonitrile of the electrolyte solution and the mass percentage of the nitrile additive is within the range of this application, the obtained lithium-ion battery has better 6C charging temperature rise and high-temperature storage volume expansion rate, indicating that the electrochemical performance of the lithium-ion battery under high temperature and high current density is improved.

It is hereby noted that the relational terms herein such as first and second are used only to differentiate an entity or operation from another entity or operation, and do not require or imply any actual relationship or sequence between the entities or operations. Moreover, the terms "include", "comprise", or any other variation thereof are intended to cover non-exclusive inclusion, so that a process, method or object that includes a series of elements includes not only those elements, but also other elements that are not expressly listed, or further includes elements inherent to such process, method or object.

The above description is only the preferred embodiment of this application and is not be used to limit this application. Any modifications, equivalent replacements, improvements, etc. made within the spirit and principle of this application are to be included within the scope of protection of this application.

## Claims

1. A separator, comprising a base film and an organic coating disposed on at least one surface of the base film;

**characterized in that**, in a 10μm×5μm region of the organic coating, based on a mass of the organic coating, a mass percentage of carbon element in the organic coating is W1, a mass percentage of fluorine element in the organic coating is W2, and $0.45 \leq W1 / W2 \leq 6$; and
the separator further comprises an inorganic coating, the inorganic coating is disposed between the base film and the organic coating, the inorganic coating has a thickness of d3, the base film has a maximum pore size of r1, and $0.01 \leq r1 / d3 \leq 0.21$.

**2.** The separator according to claim 1, **characterized in that**, $0.45 \leq W1 / W2 \leq 4.5$.

**3.** The separator according to claim 1, **characterized in that**, $0.45 \leq W1 / W2 \leq 3$.

**4.** The separator according to claim 1, **characterized in that**, the organic coating comprises a first polymer and a second polymer; and the first polymer comprises at least one of homopolymers or copolymers of at least one monomer of propylene, vinylidene fluoride, acrylic acid, acrylate, styrene, acrylonitrile, Maleic anhydride, vinyl chloride, or allyl chloride; the second polymer comprises at least one of homopolymers or copolymers of at least one monomer of vinylidene fluoride or hexafluoropropylene; based on the mass of the organic coating, a mass percentage of the first polymer is W3, and $35\% \leq W3 \leq 75\%$; and a mass percentage of the second polymer is W4, and $20\% \leq W4 \leq 60\%$.

**5.** The separator according to claim 1, **characterized in that**, the organic coating has a thickness of d1, the separator has a thickness of d2, $0.1 \leq d1 / d2 \leq 0.25$, and $1\ \mu m \leq d1 \leq 4\ \mu m$.

**6.** The separator according to claim 1, **characterized in that**, the base film comprises at least one of polyethylene, polypropylene, polyvinylidene fluoride, polyethylene terephthalate, polyimide, or aramid, and the base film has an average pore size of r2 and a minimum pore size of r3, $0.03\ \mu m \leq r1 - r2 \leq 0.14\ \mu m$, and/or $0.010\ \mu m \leq r2 - r3 \leq 0.035\ \mu m$.

**7.** The separator according to claim 6, **characterized in that**, $0.06\ \mu m \leq r1 \leq 0.22\ \mu m$.

**8.** The separator according to claim 1, **characterized in that**, $0.02 \leq r1 / d3 \leq 0.14$.

**9.** An electrochemical apparatus, comprising a positive electrode plate, a negative electrode plate, an electrolyte solution and the separator according to any one of claims 1 to 8.

**10.** The electrochemical apparatus according to claim 9, **characterized in that**, the electrolyte solution comprises an additive, and the additive comprises a nitrile additive and a fluorine additive; and the nitrile additive comprises at least one of ethylene glycol bis(propionitrile) ether, adiponitrile, or succinonitrile, and the fluorine additive comprises at least one of fluoroethylene carbonate, difluoroethylene carbonate, trifluoropropylene carbonate, lithium bis(trifluoromethanesulphonyl)imide, or lithium bis(fluorosulfonyl)imide.

**11.** The electrochemical apparatus according to claim 10, **characterized in that**, based on a total mass of the electrolyte solution, a mass percentage of the nitrile additive is W5, a mass percentage of the fluorine additive is W6, $1\% \leq W5 + W6 \leq 8\%$, and $0.3\% \leq W5 \leq 6\%$.

**12.** The electrochemical apparatus according to claim 10, **characterized in that**, the electrolyte solution comprises acetonitrile; and based on a total mass of the electrolyte solution, a mass percentage of the acetonitrile is W7, and $45\% \leq W7 - W5 \leq 60\%$.

**13.** An electrical apparatus, comprising the electrochemical apparatus according to any one of claims 9 to 12.

Europäisches Patentamt
European Patent Office
Office européen des brevets

## PARTIAL EUROPEAN SEARCH REPORT

under Rule 62a and/or 63 of the European Patent Convention. This report shall be considered, for the purposes of subsequent proceedings, as the European search report

Application Number
EP 25 20 8043

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 340 115 A1 (LG ENERGY SOLUTION LTD [KR]) 20 March 2024 (2024-03-20)<br>* paragraph [0005] - paragraph [0006] *<br>* paragraph [0016] - paragraph [0017] *<br>* paragraph [0021] *<br>* paragraph [0024] *<br>* paragraph [0027] - paragraph [0030] *<br>* paragraph [0038] *<br>* paragraph [0047] *<br>* paragraph [0050] *<br>* paragraph [0057] *<br>* paragraph [0072] - paragraph [0074] *<br>* figures 4a,4b *<br>----- | 1-12 | INV.<br>H01M10/0567<br>H01M50/403<br>H01M50/417<br>H01M50/426<br>H01M50/434<br>H01M50/443<br>H01M50/446<br>H01M50/449<br>H01M50/451<br>H01M50/457<br>H01M50/489<br>H01M50/491 |
| A | CN 114 843 708 B (SINOMA LITHIUM FILM NINGXIANG CO LTD)<br>11 October 2022 (2022-10-11)<br>* paragraph [0009] - paragraph [0011] *<br>* paragraph [0017] - paragraph [0019] *<br>* paragraph [0058] *<br>-----<br>-/-- | 1-12 | ADD.<br>H01M10/0525 |
| | | | TECHNICAL FIELDS SEARCHED (IPC) |
| | | | H01M |

### INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

2

| Place of search | Date of completion of the search | Examiner |
|---|---|---|
| The Hague | 8 July 2026 | Crottaz, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04E07)

page 1 of 2

Europäisches
Patentamt
European
Patent Office
Office européen
des brevets

## PARTIAL EUROPEAN SEARCH REPORT

Application Number
EP 25 20 8043

| DOCUMENTS CONSIDERED TO BE RELEVANT | | | CLASSIFICATION OF THE APPLICATION (IPC) |
|---|---|---|---|
| Category | Citation of document with indication, where appropriate, of relevant passages | Relevant to claim | |
| A | US 2019/198840 A1 (HUANG HUAFENG [CN] ET AL) 27 June 2019 (2019-06-27)<br>* paragraph [0005] - paragraph [0006] *<br>* paragraph [0024] - paragraph [0032] *<br>* paragraph [0048] *<br>* paragraph [0072] *<br>----- | 1-12 | |
| | | | TECHNICAL FIELDS SEARCHED (IPC) |

2

EPO FORM 1503 03.82 (P04C10)

Europäisches
Patentamt
European
Patent Office
Office européen
des brevets

# INCOMPLETE SEARCH SHEET C

Application Number
EP 25 20 8043

Claim(s) completely searchable:
-

Claim(s) searched incompletely:
1-12

Reason for the limitation of the search:

The reasons for which search was restricted are specified in the annexed opinion accompanying the incomplete search report.

## ANNEX TO THE EUROPEAN SEARCH REPORT ON EUROPEAN PATENT APPLICATION NO.

EP 25 20 8043

This annex lists the patent family members relating to the patent documents cited in the above-mentioned European search report. The members are as contained in the European Patent Office EDP file on
The European Patent Office is in no way liable for these particulars which are merely given for the purpose of information.

08-07-2026

| Patent document cited in search report | Publication date | Patent family member(s) | Publication date |
|---|---|---|---|
| EP 4340115 A1 | 20-03-2024 | CN 117501529 A | 02-02-2024 |
| | | EP 4340115 A1 | 20-03-2024 |
| | | ES 3071012 T3 | 18-06-2026 |
| | | JP 7744080 B2 | 25-09-2025 |
| | | JP 2024524024 A | 05-07-2024 |
| | | KR 20230062384 A | 09-05-2023 |
| | | WO 2023075271 A1 | 04-05-2023 |
| CN 114843708 B | 11-10-2022 | CN 114843708 A | 02-08-2022 |
| | | WO 2024008055 A1 | 11-01-2024 |
| US 2019198840 A1 | 27-06-2019 | CN 109950451 A | 28-06-2019 |
| | | EP 3503255 A1 | 26-06-2019 |
| | | US 2019198840 A1 | 27-06-2019 |

EPO FORM P0459

For more details about this annex : see Official Journal of the European Patent Office, No. 12/82